(19) **Europäisches Patentamt / European Patent Office / Office européen des brevets**

(11) **EP 3 035 749 A1**

(12) **EUROPEAN PATENT APPLICATION**
published in accordance with Art. 153(4) EPC

(43) Date of publication:
**22.06.2016 Bulletin 2016/25**

(21) Application number: **13891569.9**

(22) Date of filing: **13.08.2013**

(51) Int Cl.:
*H04W 52/14* (2009.01)

(86) International application number:
**PCT/CN2013/081382**

(87) International publication number:
**WO 2015/021599 (19.02.2015 Gazette 2015/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Fujitsu Limited
Kawasaki-shi, Kanagawa 211-8588 (JP)**

(72) Inventors:
• **WANG, Yi**
  **Beijing 100025 (CN)**
• **XU, Haibo**
  **Beijing 100025 (CN)**

(74) Representative: **Schultes, Stephan
Haseltine Lake LLP
300 High Holborn
London WC1V 7JH (GB)**

(54) **POWER CONTROL METHOD OF UPLINK CHANNEL, USER EQUIPMENT AND COMMUNICATION SYSTEM**

(57) Embodiments of the present disclosure provide a power control method for an uplink channel, a user equipment and a communication system. The power control method includes: the user equipment sorts priorities of uplink channels of the at least two cells when the user equipment transmits uplink channel signals containing UCI for the at least two cells in the same subframe; and allocates power for the uplink channels of the at least two cells, or performs selection on the uplink channels, according to a result of the sorting regarding the priorities. With the embodiments of the present disclosure, a problem that a sum of transmission power is greater than a configured maximum output power that may be resulted from simultaneously transmitting uplink channels containing UCI in different serving cells within the same frame is solved.

801

The UE sorts priorities of uplink channels of the at least two cells when the UE transmits uplink channel signals containing UCI for the at least two cells in the same subframe

802

The UE allocates power for the uplink channels of the at least two cells, or performs selection on the uplink channels, according to a result of the sorting regarding the priorities

**Fig. 8**

**Description**

Technical Field

The present disclosure relates to the field of communications, and in particular to a power control method for an uplink channel, a user equipment and a communication system.

Background

In a long-term evolution (LTE) system, a power control method for a user equipment in transmitting a physical uplink share channel (PUSCH), a physical uplink control channel (PUCCH), an uplink sounding reference signal (SRS) and a physical random access channel (PRACH) is defined. When the user equipment is configured with multiple carriers, power control of independent uplink transmission signals is performed on each serving cell; wherein, when the PUSCH and the PUCCH cannot be transmitted simultaneously, a formula of power control for the PUSCH is:

$$P_{\text{PUSCH,c}}(i) = \min \begin{Bmatrix} P_{\text{CMAX},c}(i), \\ 10\log_{10}(M_{\text{PUSCH,c}}(i)) + P_{\text{O\_PUSCH,c}}(j) + \alpha_c(j) \cdot PL_c + \Delta_{\text{TF,c}}(i) + f_c(i) \end{Bmatrix}$$

$$[\text{dBm}] \quad (1);$$

and when the PUSCH and the PUCCH can be transmitted simultaneously, a formula of power control for the PUSCH is:

$$P_{\text{PUSCH,c}}(i) = \min \begin{Bmatrix} 10\log_{10}(\hat{P}_{\text{CMAX},c}(i) - \hat{P}_{\text{PUCCH}}(i)), \\ 10\log_{10}(M_{\text{PUSCH,c}}(i)) + P_{\text{O\_PUSCH,c}}(j) + \alpha_c(j) \cdot PL_c + \Delta_{\text{TF,c}}(i) + f_c(i) \end{Bmatrix}$$

$$[\text{dBm}] \quad (2);$$

and a formula of power control for the PUCCH is:

$$P_{\text{PUCCH}}(i) = \min \begin{Bmatrix} P_{\text{CMAX,c}}(i), \\ P_{\text{0\_PUCCH}} + PL_c + h(n_{CQI}, n_{HARQ}, n_{SR}) + \Delta_{\text{F\_PUCCH}}(F) + \Delta_{TxD}(F') + g(i) \end{Bmatrix}$$

$$[\text{dBm}] \quad (3);$$

In the LTE system, if the UE is configured to be unable to transmit simultaneously the PUSCH and the PUCCH, the same UE will not transmit simultaneously the PUSCH and the PUCCH in one or more carrier(s) within the same subframe. And when the UE is configured to be able to transmit simultaneously the PUSCH and the PUCCH, the same UE may transmit simultaneously the PUSCH and the PUCCH in one or more carrier(s) within the same subframe. However, the PUCCH is only transmitted in a primary component carrier (PCC). Uplink control information (UCI) carried by the PUSCH contains UCI in all corresponding carriers, and the UCI can only be transmitted within a PUSCH in a carrier. That is, either the UCI in all corresponding carriers is combined, or a part of it is discarded according to a predefined rule, and finally can only be transmitted in a CC via a PUCCH and/or a PUSCH.

After transmission power of an uplink signal exceeds configured maximum output power (PCMAX) of the user equipment, that is, overflow of output power of the user equipment occurs, transmission power used by the user equipment in transmitting the above uplink signal is equal to the PCMAX of the user equipment, and the user equipment will perform power adjustment on corresponding uplink channel(s).

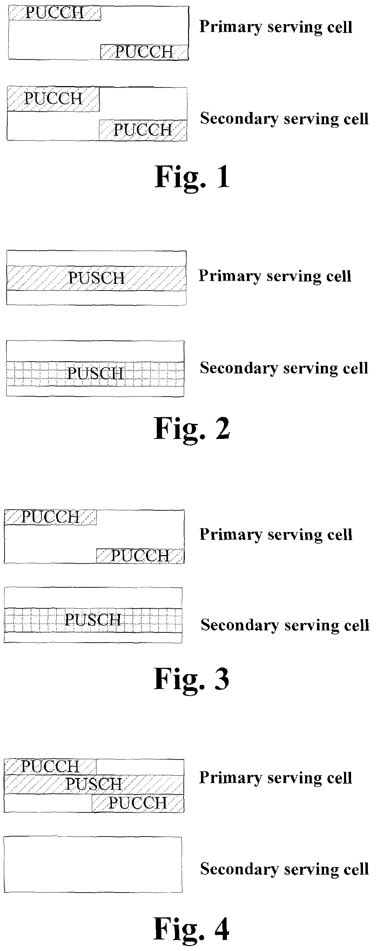

Figure 1 is a schematic diagram of simultaneously transmitting multiple PUCCHs by a user equipment in an LTE-A system in different cells within the same subframe, Figure 2 is a schematic diagram of simultaneously transmitting multiple PUSCHs by a user equipment in an LTE-A system in different cells within the same subframe, Figure 3 is a schematic diagram of simultaneously transmitting a PUCCH and a PUSCH by a user equipment in an LTE-A system in different cells within the same subframe, and Figure 4 is a schematic diagram of simultaneously transmitting a PUCCH and a PUSCH by a user equipment in an LTE-A system in a primary serving cell within the same subframe.

As shown in Fig. 1, as a carrier aggregation technique is used, after the user equipment is configured with multiple serving cells, it will occur that within the same subframe, multiple PUCCHs are simultaneously transmitted in different serving cells, or as shown in Fig. 2, that multiple PUSCHs are simultaneously transmitted in different serving cells, or as shown in Fig. 3, a PUSCH and a PUCCH are simultaneously transmitted. And on the other hand, as an ability of the user equipment is enhanced, as shown in fig. 4, the user equipment may simultaneously transmit a PUSCH and a PUCCH in a primary serving cell within the same subframe.

When the above cases occur, that is, within the same subframe, the user equipment needs to simultaneously transmit multiple PUSCHs, or the user equipment needs to simultaneously transmit a PUSCH and a PUCCH, it will occur that a sum of transmission power of multiple PUSCHs is greater than PCMAX of the user equipment, or a sum of transmission power of the PUSCH and PUCCH is greater than the PCMAX of the user equipment. In order to direct allocation of the transmission power of the user equipment in such cases, a method of power control in a case where transmission power of user equipment is limited is defined in the LTE-A standardization. Details are as follows:

only when multiple PUSCHs with no UCI need to be transmitted simultaneously, if total transmission power obtained at this moment exceeds the PCMAX of the user equipment, the user equipment lowers transmission power in each PUSCH by the same share, until it is ensured that the total transmission power is less than or equal to the PCMAX of the user equipment;

when PUSCHs with no UCI and PUCCHs need to be transmitted simultaneously, if total transmission power obtained at this moment exceeds the PCMAX of the user equipment, the user equipment needs to first ensure that transmission power of the PUCCHs is satisfied, and then lower transmission power in each PUSCH with no UCI by the same share, until it is ensured that the total transmission power is less than or equal to the PCMAX of the user equipment, as shown in Formula (4);

for example, when the PUSCHs with no UCI and PUCCHs are transmitted simultaneously, it is ensured that the transmission power of the PUCCHs is satisfied:

$$\sum_{c} w(i) \cdot \hat{P}_{\text{PUSCH},c}(i) \le \left( \hat{P}_{\text{CMAX}}(i) - \hat{P}_{\text{PUCCH}}(i) \right) \tag{4};$$

when PUSCHs with no UCI and PUSCHs with UCI need to be transmitted simultaneously, if total transmission power obtained at this moment exceeds the PCMAX of the user equipment, the user equipment needs to first ensure that transmission power of the PUSCHs with UCI is satisfied, and then lower transmission power in each PUSCH with no UCI by the same share, until it is ensured that the total transmission power is less than or equal to the PCMAX of the user equipment, as shown in Formula (5);

for example, when the PUSCHs with UCI and PUSCHs with no UCI are transmitted simultaneously, it is ensured that the transmission power of the PUSCHs with UCI is satisfied:

$$\sum_{c \ne j} w(i) \cdot \hat{P}_{\text{PUSCH},c}(i) \le \left( \hat{P}_{\text{CMAX}}(i) - \hat{P}_{\text{PUSCH},j}(i) \right) \tag{5};$$

when PUCCHs, PUSCHs with no UCI and PUSCHs with UCI need to be transmitted simultaneously, if total transmission power obtained at this moment exceeds the PCMAX of the user equipment, the user equipment needs to first ensure that transmission power of the PUCCHs is satisfied, then ensure that transmission power of the PUSCHs with UCI is satisfied, and thereafter, lower transmission power in each PUSCH with no UCI by the same share, until it is ensured that the total transmission power is less than or equal to the PCMAX of the user equipment, as shown in Formula (6);

for example, when the PUCCHs, the PUSCHs with UCI and the PUSCHs with no UCI are transmitted simultaneously, the PUCCHs are ensured first, then the PUSCHs with UCI are ensured, and thereafter, the PUSCHs with no UCI are ensured:

$$\hat{P}_{\text{PUSCH},j}(i) = \min\left( \hat{P}_{\text{PUSCH},j}(i), \left( \hat{P}_{\text{CMAX}}(i) - \hat{P}_{\text{PUCCH}}(i) \right) \right)$$

$$\sum_{c \ne j} w(i) \cdot \hat{P}_{\text{PUSCH},c}(i) \le \left( \hat{P}_{\text{CMAX}}(i) - \hat{P}_{\text{PUCCH}}(i) - \hat{P}_{\text{PUSCH},j}(i) \right) \tag{6}.$$

It was found by the inventors that power control of uplink channels for one serving cell, or power control for transmitting uplink channels by a primary serving cell and a secondary serving cell, is only defined in an existing specification.

However, as continuous development of small base stations, a scenario where there exist multiple small base stations in a macro base station will appear in Rel. 12, each small base station being relatively small in coverage, and relatively large in amount. The small base stations may occupy different frequency spots from the macro base station, and may occupy the same frequency spots as the macro base station. Backhauls between the small base stations and the macro base station may be ideal, that is, latency is very small or may be neglected, and abilities to transmit are powerful. More typically, the backhauls are non-ideal, that is, latency in transmission is relatively large and abilities to transmit are limited. Cases of power control of uplink channels of user equipment in these scenarios are not taken into account in existing specifications.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

Summary

Embodiments of the present disclosure provide a power control method for an uplink channel, user equipment and communication system, with an object being to control transmission power of an uplink channel for a user equipment keeping in connection with at least two cells.

According to an aspect of the embodiments of the present disclosure, there is provided a power control method for an uplink channel, applicable to a user equipment keeping in connection with at least two cells, the method including:

sorting, by the user equipment, priorities of uplink channels of the at least two cells when the user equipment transmits uplink channel signals containing uplink control information (UCI) for the at least two cells in the same subframe; and allocating power for the uplink channels of the at least two cells, or performing selection on the uplink channels, according to a result of the sorting regarding the priorities.

According to another aspect of the embodiments of the present disclosure, there is provided a user equipment, keeping in connection with at least two cells, the user equipment including:

a priority determining unit configured to sort priorities of uplink channels of the at least two cells, when uplink channel signals containing UCI are transmitted in the same subframe for the at least two cells; and a power control unit configured to allocate power for the uplink channels of the at least two cells, or perform selection on the uplink channels, according to a result of the sorting regarding the priorities.

According to a further aspect of the embodiments of the present disclosure, there is provided a communication system, including:

a user equipment, keeping in connection with at least two cells, and configured to sort priorities of uplink channels of the at least two cells, when uplink channel signals containing UCI are transmitted in the same subframe for the at least two cells; and allocate power for the uplink channels of the at least two cells, or perform selection on the uplink channels, according to a result of the sorting regarding the priorities.

According to still another aspect of the embodiments of the present disclosure, there is provided a computer-readable program, wherein when the program is executed in a user equipment, the program enables a computer to carry out the power control method for an uplink channel as described above in the user equipment.

According to yet another aspect of the embodiments of the present disclosure, there is provided a storage medium in which a computer-readable program is stored, wherein the computer-readable program enables a computer to carry out the power control method for an uplink channel as described above in a user equipment.

An advantage of the embodiments of the present disclosure exists in that for a user equipment keeping in connection with at least two cells, a problem that a sum of transmission power is greater than a configured maximum output power that may be resulted from simultaneously transmitting uplink channels containing UCI in different serving cells within the same frame is solved.

With reference to the following description and drawings, the particular embodiments of the present disclosure are disclosed in detail, and the principles of the present disclosure and the manners of use are indicated. It should be understood that the scope of the embodiments of the present disclosure is not limited thereto. The embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated or reduced.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

Figure 1 is a schematic diagram of simultaneously transmitting multiple PUCCHs by a user equipment in an LTE-A system in different cells within the same subframe;

Figure 2 is a schematic diagram of simultaneously transmitting multiple PUSCHs by a user equipment in an LTE-A system in different cells within the same subframe;

Figure 3 is a schematic diagram of simultaneously transmitting a PUCCH and a PUSCH by a user equipment in an LTE-A system in different cells within the same subframe;

Figure 4 is a schematic diagram of simultaneously transmitting a PUCCH and a PUSCH by a user equipment in an LTE-A system in a primary serving cell within the same subframe;

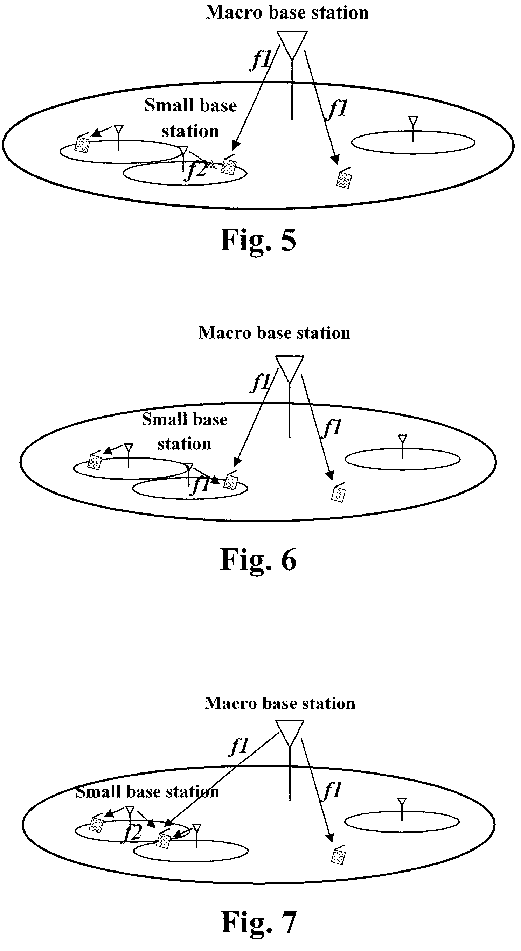

Figure 5 is a schematic diagram of a user equipment keeping in connection with a macro base station and a small base station;

Figure 6 is another schematic diagram of a user equipment keeping in connection with a macro base station and a small base station;

Figure 7 is a further schematic diagram of a user equipment keeping in connection with a macro base station and a small base station;

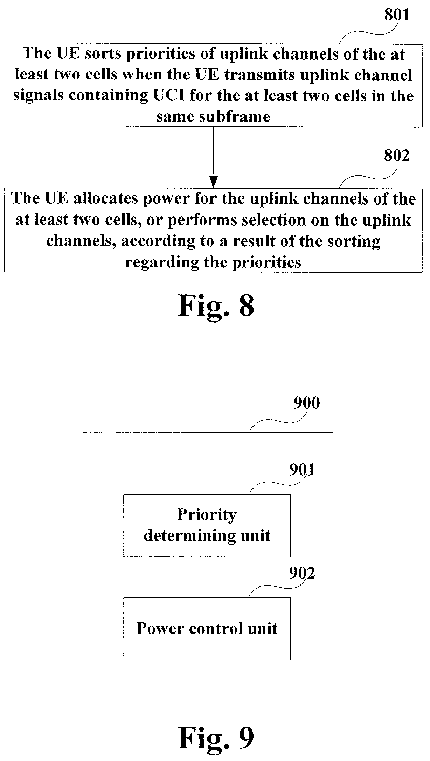

Figure 8 is a flowchart of the power control method of an embodiment of the present disclosure;

Figure 9 is a schematic diagram of a structure of the user equipment of an embodiment of the present disclosure; and

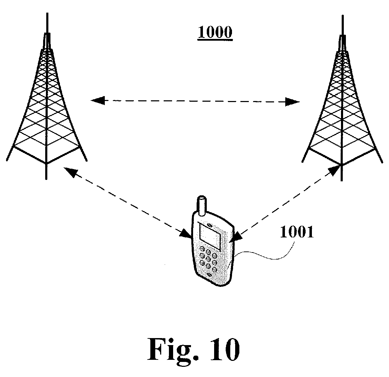

Figure 10 is a schematic diagram of a structure of the communication system of an embodiment of the present disclosure.

Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

Fig. 5 is a schematic diagram of a user equipment keeping in connection with a macro base station and a small base station. As shown in Fig. 5, the user equipment may keep in connection with the macro base station by using a frequency $f1$, and may keep in connection with the small base station by using a frequency $f2$. Fig. 6 is another schematic diagram of a user equipment keeping in connection with a macro base station and a small base station. As shown in Fig. 6, the user equipment may keep in connection with the macro base station by using a frequency $f1$, and may keep in connection with the small base station also by using the frequency $f1$. Fig. 7 is a schematic diagram of a user equipment keeping in connection with a macro base station and small base stations. As shown in Fig. 7, the user equipment may keep in connection with the macro base station by using a frequency $f1$, may keep in connection with a small base station by using a frequency $f2$, and may keep in connection with another small base station also by using the frequency $f1$.

As shown in Figs. 5-7, the user equipment may operate under carrier aggregation similar to different eNBs (inter-eNB). As small base stations and a macro base station belong to different eNBs, and their backhaul is non-ideal, uplink control information is more suitable for being transmitted in uplink channels of the eNBs. Hence, it is possible that the following occurs: simultaneous transmission of PUCCHs in the small base stations and the macro base station, or transmission of PUSCHs containing UCI in the small base stations and transmission of PUSCHs containing UCI also in the macro base station, or transmission of PUSCHs containing UCI in the small base stations and transmission of PUCCHs in the macro base station, or transmission of PUCCHs in the small base stations and transmission of PUSCHs containing UCI in the small base stations, or transmission of PUCCHs and PUSCHs containing UCI in the small base stations and transmission of PUCCHs only in the macro base station, or transmission of PUCCHs and PUSCHs containing UCI in the macro base station and transmission of PUCCHs only in the small base stations, or transmission of PUCCHs and PUSCHs containing UCI in the small base stations and transmission of PUSCHs containing UCI only in the macro base station, or transmission of PUCCHs and PUSCHs containing UCI in the macro base stations and transmission of PUSCHs containing UCI only in the small base stations, or transmission of PUCCHs and PUSCHs containing UCI in the small base stations and transmission of PUCCHs and PUSCHs containing UCI also in the macro base station; for PUCCHs, there will be a case of a combination of PUSCHs containing UCI and PUSCHs containing no UCI, which shall not be described herein any further.

It should be noted that the user equipment keeping in connection with a macro base station and small base stations is only illustrated above. However, the present disclosure is not limited thereto. The embodiments of the present disclosure shall be described below in detail taking the scenarios shown in Figs. 5-7 as examples.

Embodiment 1

An embodiment of the present disclosure provides a power control method for an uplink channel, applicable to a user equipment keeping in connection with at least two cells. Fig. 8 is a flowchart of the power control method of the embodiment of the present disclosure. As shown in Fig. 8, the method includes:

step 801: the user equipment sorts priorities of uplink channels of the at least two cells when the user equipment transmits uplink channel signals containing UCI for the at least two cells in the same subframe; and
step 802: the user equipment allocates power for the uplink channels of the at least two cells, or performs selection on the uplink channels, according to a result of the sorting regarding the priorities.

In this embodiment, the at least two cells are as shown in Figs. 5-7, and may be formed by a macro base station and a small base station. For example, they may be a macro cell under a macro base station (such as a macro eNB) and one or more small cell(s) under a small base station (such as a small cell eNB), may be a primary cell at a dominant position and one or more secondary cell(s) at a subordinate position, and may also be multiple small cells, etc. The present disclosure is not limited thereto, and the following description is given taking only two cells as examples, with cases of more than two cells being similar thereto.

In this embodiment, there may exist non-ideal backhaul between base stations of the at least two cells; however, the present disclosure is not limited thereto. Multiple cells belonging to the same eNB and are connected via ideal backhaul may be dealt with according to the relevant art.

In this embodiment, within the same frame may be referred as subframe indices are identical; however, the present disclosure is not limited thereto. For example, if the two cells are not synchronized, it is not limited that the subframe indices are identical, but it may be a period of time identical to a subframe length in a temporal dimension sense.

In this embodiment, before step 801, the user equipment may generate ACK/NACK feedback according to a received downlink signal, or generate corresponding uplink control information according to a period and offset configured for periodic CSI, or according to received aperiodic CSI triggering indication, or according to a request for needed resources of uplink traffics.

After step 802, the user equipment may transmit the uplink channel signals according to a result of power allocation for uplink channels, or a result of selection of uplink channels. The relevant art may be referred to for details of the generation of the UCI and the transmission of the uplink channels.

In this embodiment, taking PUCCHs as an example, the uplink channels of the at least two cells include: a PUCCH for a cell and a PUCCH for another cell. It may be first determined whether the user equipment needs to transmit the PUCCHs in a serving cell and transmit also PUCCHs in other serving cells within the same subframe.

In step 801, the sorting priorities of uplink channels of the at least two cells may include: determining priorities of the PUCCHs according to a type of the UCI contained in the PUCCHs and/or a type or indexes of the at least two cells.

In an implementation, when the user equipment needs to transmit the PUCCH in a serving cell and transmit also PUCCH in another serving cell within the same subframe, priorities of power allocation may be determined according to the type of the UCI carried by the PUCCHs.

What is carried by the PUCCHs may be ACK/NACK feedback, a schedule request (SR), or a periodic channel state information (CSI) report. One of the following conditions or a combination thereof is adopted in performing the sorting regarding the priorities:

condition 1: the priority of the PUCCH containing ACK/NACK being higher than the priority of the PUCCH containing periodic CSI;

condition 2: the priority of the PUCCH containing an SR being higher than the priority of the PUCCH containing periodic CSI; and

condition 3: the priority of the PUCCH containing ACK/NACK being higher than the priority of the PUCCH containing an SR.

Furthermore, the method may include:

condition 4: sorts priorities of the PUCCHs containing different types of periodic CSI.

A periodic CSI report may be one of the following or a combination thereof:

- Type 1: report supports CQI feedback for the UE selected sub-bands;
- Type 1a : report supports subband CQI and second PMI feedback;
- Type 2, Type 2b, and Type 2c: report supports wideband CQI and PMI feedback;
- Type 2a: report supports wideband PMI feedback;
- Type 3: report supports RI feedback;
- Type 4: report supports wideband CQI;
- Type 5: report supports RI and wideband PMI feedback;
- Type 6: report supports RI and PTI feedback

PUCCHs containing different types of periodic CSI reports may determine the priorities in a manner as follows:

highest priority: types 3, 5, 6 and 2a;
second priority: types 2, 2b, 2c and 4; and
third priority: types 1 and 1a.

Furthermore, when the priorities of the PUCCHs containing periodic CSI are identical, the priorities may be further determined according to ID numbers of CSI processes. For example, the smaller an ID number of a CSI process, the lower a priority.

It should be noted that the above conditions may be used separately, or may be used after some of them are combined, or may be used after all of them are combined; however, the present disclosure is not limited thereto.

In this embodiment, when the PUCCH contains two or more types of UCI, the priority of the PUCCH may be determined according to the priorities of the two or more types of UCI.

In particular, if a PUCCH carries more than one types of UCI, in comparing priorities of multiple PUCCHs, the comparison is performed according to UCI of highest priority in each PUCCH; and if priorities of UCI of highest priorities are identical, the comparison is performed according to UCI of second priority in each PUCCH; and so on.

For example, if a PUCCH in a cell 1 carries ACK/NACK and periodic CSI and a PUCCH in a cell 2 carries an SR, as the ACK/NACK of a highest priority in the cell 1 is higher than the SR of a highest priority in the cell 2 in priority, it may be judged that the priority of the PUCCH in the cell 1 is higher than that of the PUCCH in the cell 2.

In another implementation, when the user equipment needs to transmit a PUCCH signal in a serving cell and transmit also a PUCCH signal in another serving cell within the same subframe, the priorities of the power allocation may be determined according to the index/type of each cell.

One cell may be a primary serving cell, and the other serving cell may be a secondary serving cell; or one cell may be a primary serving cell, and the other cell may be a primary serving cell at a subordinate position or a secondary serving cells; or one cell is a macro cell, and other cell is a small cell. Or, the cells are sorted according to a rule. For example, a priority of a cell carrying a control plane signal is higher than that of a cell carrying a user plane signal, etc.

In this implementation, one of the following conditions or a combination thereof may be adopted in the sorting regarding the priorities: the priority of the PUCCH for a primary cell being higher than the priority of the PUCCH for a secondary cell; the priority of the PUCCH for a macro cell being higher than the priority of the PUCCH for a small cell; and the priority of the PUCCH for a cell with a smaller index being higher than the priority of the PUCCH for a cell with a larger index.

It should be noted that the above conditions may be used separately, or may be used after some of them are combined, or may be used after all of them are combined; however, the present disclosure is not limited thereto.

In still another implementation, when the user equipment needs to transmit a PUCCH signal in a serving cell and transmit also a PUCCH signal in another serving cell within the same subframe, the priorities of the power allocation may be determined according to the type of the UCI carried by the PUCCHs and the index/type of each cell.

In particular, the priorities may be determined according to the type of the UCI carried by the PUCCHs, and if the priorities are identical, the priorities may be determined according to the index/type of each cell.

For example, if the user equipment needs to transmit in the macro base station a PUCCH carrying a periodic CSI report and transmit in the small base station a PUCCH carrying ACK/NACK, it may be determined according to the condition of the ACK/NACK being higher than the periodic CSI report that the priority of the PUCCH in the small base station is highest.

For another example, if the user equipment needs to transmit in the macro base station a PUCCH carrying a periodic CSI report, transmit in a small base station • a PUCCH carrying ACK/NACK and transmit in a small base station 2 a PUCCH carrying a periodic CSI report, and a type of the periodic CSI report is identical to that of the periodic CSI report in the macro base station, for example, both of them are of Type 3, it may be determined according to the condition of the ACK/NACK being higher than the periodic CSI report that the priority of the PUCCH in the small base station 1 is highest, and that the priority of the PUCCH in the macro base station is second and the priority of the PUCCH in the small base station 2 is lowest according to the condition of the cell formed by the macro base station being higher than the cells formed by the small base stations.

In particular, the priorities may be determined according to the index/type of each cell, and if the priorities are identical, the priorities are determined according to the type of the UCI carried by the PUCCHs.

For example, if the user equipment needs to transmit in the macro base station a PUCCH carrying a periodic CSI report and transmit in the small base stations PUCCHs carrying ACK/NACK, it may be determined according to the condition of the cell formed by the macro base station being higher than the cells formed by the small base stations that the priority of the PUCCH in the macro base station is highest.

It should be noted that how to sort priorities of the PUCCHs of at least two cells is only illustrated above. However, the present disclosure is not limited thereto, and a particular manner of determining priorities may be determined according to an actual situation. After the above priority sorting is performed, there may exist a case where multiple PUCCHs have identical priorities. How to allocate transmission power after the priorities of the PUCCHs are sorted in a case where the transmission power of the user equipment is limited shall be described below.

In an implementation, the allocating power for the uplink channels of the at least two cells according to the result of the sorting regarding the priorities in step 702 may include: allocating power for one or more PUCCH(s) having a higher priority, and in a case where there is remaining power, allocates the remaining power for one or more PUCCH(s) having a next priority.

In particular, when it is determined that the user equipment needs to transmit a PUCCH signal in a serving cell and transmit also a PUCCH signal in another serving cell within the same subframe, and it is possible that the transmission power of the user equipment exceeds a maximum transmission power $\hat{P}_{CMAX}$, power allocation is performed on the PUCCH signals in the subframe.

The priorities of the PUCCHs in each cell are sorted according to the predetermined priorities. The power allocation is performed preferentially on PUCCHs of higher priorities, and transmission power of signals of relatively low priorities is lowered, so as to ensure transmission of signals of higher priorities. In the following description, remaining transmission power refers to transmission power remained after the maximum output power of the user equipment is subtracted by allocated transmission power.

A PUCCH of a highest priority may be calculated according to Formula (3), assuming that the PUCCH of a highest priority is transmitted in *a j-th* carrier/cell:

$$P_{PUCCH}^{j}(i) = \min\left\{\begin{array}{l} P_{\mathrm{CMAX},c}(i), \\ P_{0\_\mathrm{PUCCH}} + PL_c + h\left(n_{CQI}, n_{HARQ}, n_{SR}\right) + \Delta_{\mathrm{F\_PUCCH}}(F) + \Delta_{TxD}(F') + g(i) \end{array}\right\}$$

$$(3).$$

If there exist multiple PUCCHs of identical priorities,

$$\sum_{c} w(i) \cdot \hat{P}_{\mathrm{PUCCH},c}(i) \leq \hat{P}_{\mathrm{CMAX}}(i) \qquad (7);$$

where, $w(i)$ is a power allocation weight; $w(i)$ s of the PUCCHs of identical priorities are identical.

If power of the PUCCH of a highest priority has not reached the maximum transmission power $\hat{P}_{CMAX}$ of the user terminal, power is allocated for the PUCCH of the second priority, assuming that the PUCCH of the second priority is transmitted in a *c-th* carrier/cell:

$$P^c_{PUCCH}(i) = \min\left(P^c_{PUCCH}(i), \left(\hat{P}_{CMAX}(i) - P^j_{PUCCH}(i)\right)\right), \quad c \neq j \qquad (8).$$

And so on. If a sum of power of other PUCCHs than the PUCCH of the lowest priority has not reached the maximum transmission power $\hat{P}_{CMAX}$ of the user equipment, power is allocated for the PUCCH of the lowest priority, assuming that the PUCCH of the lowest priority is transmitted in a *d-th* carrier/cell:

$$\hat{P}^d_{PUCCH}(i) \leq \left(\hat{P}_{CMAX}(i) - \hat{P}^j_{PUCCH}(i) - \hat{P}^c_{PUCCH}(i) - ....\right), d \neq ... \neq c \neq j \qquad (9).$$

If there exist multiple PUCCHs of the lowest priority,

$$\sum_{d \neq ... \neq c \neq j} w(i)\hat{P}^d_{PUCCH}(i) \leq \left(\hat{P}_{CMAX}(i) - \hat{P}^j_{PUCCH}(i) - \hat{P}^c_{PUCCH}(i) - ....\right), d \neq ... \neq c \neq j \qquad (10).$$

That is, the above-described manner is that: whether the PUCCHs of the highest priority may be transmitted at full power but not exceeds the maximum transmission power of the user equipment is judged first; if it is exceeded, equal power allocation is performed on all PUCCHs of the highest priority, and other PUCCHs of lower priorities are not transmitted; if it is not exceeded, it is ensured that the PUCCHs of the highest priority are transmitted at the full power; if there is power remained, whether the PUCCHs of secondarily highest priority may be transmitted at full power but not exceeds the maximum transmission power of the user equipment is judged; if it is exceeded, equal power allocation is performed on all PUCCHs of the secondarily highest priority, and other PUCCHs of lower priorities are not transmitted; if it is not exceeded, it is ensured that the PUCCHs of the secondarily highest priority are transmitted at the full power; if there is still power remained, power allocation is continued to be performed on PUCCHs of next priority; and so on.

For example, assuming that the user equipment needs to transmit PUCCHs in two cells respectively, the priority of the PUCCHs in a cell 1 being higher than that of the PUCCHs in a cell 2, power $P^1_{PUCCH}(i)$ of the user equipment for transmitting the PUCCHs in the cell 1 may be calculated according to the relevant art, such as Formula (3), and power $P^2_{PUCCH}(i)$ for transmitting the PUCCHs in the cell 2 may be calculated according to Formula (8), that is,

$$P^2_{PUCCH}(i) = \min\left(P^2_{PUCCH}(i), \left(\hat{P}_{CMAX}(i) - P^1_{PUCCH}(i)\right)\right).$$

Assuming that the user equipment needs to transmit PUCCHs in three cells respectively, the priority of the PUCCHs in a cell 1 being higher than that of the PUCCHs in a cell 2, and the priority of the PUCCHs in the cell 2 being higher than that of the PUCCHs in a cell 3, power $P^1_{PUCCH}(i)$ of the user equipment for transmitting the PUCCHs in the cell 1 may be calculated according to the relevant art, such as Formula (3), power $P^2_{PUCCH}(i)$ for transmitting the PUCCHs in the cell 2 may be calculated according to Formula (8), and power $P^3_{PUCCH}(i)$ for transmitting the PUCCHs in the cell 3 may be calculated according to Formula (9), that is,

$$P^3_{PUCCH}(i) = \min\left(P^3_{PUCCH}(i), \left(\hat{P}_{CMAX}(i) - P^1_{PUCCH}(i) - P^2_{PUCCH}(i)\right)\right).$$

Assuming that the user equipment needs to transmit PUCCHs in three cells respectively, the priority of the PUCCHs in a cell 1 being higher than that of the PUCCHs in a cell 2, and the priority of the PUCCHs in a cell 3 being identical to that of the PUCCHs in the cell 2, power $P^1_{PUCCH}(i)$ of the user equipment for transmitting the PUCCHs in the cell 1 may be calculated according to the relevant art, such as Formula (3), and power for transmitting the PUCCHs in the cell 2 and the cell 3 may be calculated according to Formula (10), that is,

$$\sum_{d=2,3} w(i)\hat{P}_{PUCCH}^{d}(i) \leq \left( \hat{P}_{CMAX}(i) - \hat{P}_{PUCCH}^{1}(i) \right).$$

Assuming that the user equipment needs to transmit PUCCHs in five cells respectively, the priority of the PUCCHs in a cell 1 being higher than that of the PUCCHs in a cell 2, the priority of the PUCCHs in the cell 2 being higher than that of the PUCCHs in a cell 4, the priority of the PUCCHs in a cell 3 being identical to that of the PUCCHs in the cell 2, and the priority of the PUCCHs in a cell 5 being identical to that of the PUCCHs in the cell 4, power $P_{PUCCH}^{1}(i)$ of the user equipment for transmitting the PUCCHs in the cell 1 may be calculated according to the relevant art, such as Formula (3), and power for transmitting the PUCCHs in the cells 2 and 3 and the cells 4 and 5 may be,

$$\sum_{d=2,3} w_{p1}(i)\hat{P}_{PUCCH}^{d}(i) \leq \left( \hat{P}_{CMAX}(i) - \hat{P}_{PUCCH}^{1}(i) \right)$$
$$\sum_{c=4,5} w_{p2}(i)\hat{P}_{PUCCH}^{c}(i) \leq \left( \hat{P}_{CMAX}(i) - \hat{P}_{PUCCH}^{1}(i) - \sum_{d=2,3} w_{p1}(i)\hat{P}_{PUCCH}^{d}(i) \right)$$
$$\text{或} \quad (11);$$

$$\sum_{d=2,3} P_{PUCCH}^{d}(i) = \min\left( \sum_{d=2,3} P_{PUCCH}^{d}(i), \left( \hat{P}_{CMAX}(i) - P_{PUCCH}^{1}(i) \right) \right)$$
$$\sum_{c=4,5} w(i)\hat{P}_{PUCCH}^{c}(i) \leq \left( \hat{P}_{CMAX}(i) - \hat{P}_{PUCCH}^{1}(i) - \sum_{d=2,3} \hat{P}_{PUCCH}^{d}(i) \right)$$
$$(12).$$

In another implementation, the allocating power for the uplink channels of the at least two cells according to the result of the sorting regarding the priorities in step 702 may include: weighting transmission power of the PUCCHs according to the result of the sorting regarding the priorities, and allocates power for each of the PUCCHs according to the weights.

That is, power allocation is performed on the PUCCHs of various priorities, and it is ensured that the PUCCHs of higher priorities have relatively high power, and the PUCCHs of lower priorities have relatively low power.

In a further implementation, the performing selection on the uplink channels, according to the result of the sorting regarding the priorities in step 802 may include: allocating power for one PUCCH having a higher priority, and discarding rest of the PUCCHs.

In particular, when it is determined that the user equipment needs to transmit a PUCCH signal in a serving cell and transmit also a PUCCH signal in another serving cell within the same subframe, and the transmission power of the user equipment may exceed the maximum transmission power $\hat{P}_{CMAX}$, only one PUCCH is transmitted within the subframe, and rest of the PUCCHs are discarded.

With the above method, when it is needed to simultaneously transmit PUCCHs in different serving cells within the same subframe, power allocation is performed on multiple PUCCHs or only one PUCCH is selected to be transmitted. Hence, the transmission power of the user equipment is lowered, and a problem that a sum of transmission power is greater than a configured maximum output power that may be resulted from simultaneously transmitting uplink channels containing UCI in different serving cells within the same frame is solved.

Embodiment 2

An embodiment of the present disclosure provides a power control method for an uplink channel, applicable to a user equipment side keeping in connection with at least two cells. This embodiment shall be described taking PUSCHs of the at least two cells as an example, with contents identical to those in Embodiment 1 being not going to be described herein any further.

The two cells carrying the PUSCHs may be cells with identical types/indices under different base stations. For example, they may be primary cells of a macro base station and a small base station, respectively, or they may be secondary cells with identical indices of a macro base station and a small base station, respectively; or they may be cells with different types/indices of different base stations, for example, they may be a primary cell of a macro base station and a secondary cell of a small base station, respectively; or they may be cells with different types/indices of the same eNB. However, the present disclosure is not limited thereto.

In this embodiment, the uplink channels of the at least two cells include: a PUSCH for a cell and a PUSCH for another cell. And the sorting priorities of uplink channels of the at least two cells may include: determining priorities of the PUSCHs according to a type of the UCI contained in the PUSCHs and/or a type or indexes of the at least two cells.

If the user equipment may support that PUSCHs and PUCCHs are transmitted simultaneously in the same carrier or in different carriers, in such configuration, if the PUSCHs carry the UCI, it is possible that they contain periodic or aperiodic CSI. And if the user equipment does not support that PUSCHs and PUCCHs are transmitted simultaneously in the same carrier or in different carriers, in such configuration, if the PUSCHs carry the UCI, it is possible that they contain ACK/NACK, periodic CSI or aperiodic CSI.

In an implementation, when the user equipment needs to transmit the PUSCHs in a serving cell and transmit also PUSCHs in another serving cell within the same subframe, priorities of power allocation may be determined according to the type of the UCI carried by the PUSCHs.

The UCI carried by the PUSCHs may include: ACK/NACK, a periodic CSI report or an aperiodic CSI report. The possible combinations of the periodic CSI report have been described in Embodiment 1, and shall not be described herein any further. And according to an existing specification, the aperiodic CSI report may include an RI, a wideband or subband first PMI/second PMI, and a wideband or subband CQI.

In this embodiment, one of the following conditions or a combination thereof may be adopted in determining the priorities of the PUSCHs according to the type of the UCI carried by the PUSCHs:

condition 5: the priority of the PUSCH containing ACK/NACK being higher than the priority of the PUSCH containing periodic CSI;

condition 6: the priority of the PUSCH containing ACK/NACK being higher than the priority of the PUSCH containing aperiodic CSI; and

condition 7: the priority of the PUSCH containing aperiodic CSI being higher than the priority of the PUSCH containing periodic CSI.

Furthermore, the method may include: sorting priorities of the PUSCHs containing different types of periodic CSI. The Embodiment 1 may be referred to for priorities of the different types of periodic CSI.

Or, priorities of the PUSCHs containing different types of aperiodic CSI may be sorted. For example, the priorities may be determined according to a feedback type, such as modes 1-2, and 2-2, etc. Following Table 1 may be referred to for the feedback type.

Table 1

| | | PMI feedback type | | |
|---|---|---|---|---|
| | | No PMI | Single PMI | Multiple PMIs |
| PUSCH CQI Feedback type | Wideband (wideband CQI) | | | Mode 1-2 |
| | User equipment selection (subband CQI) | Mode 2-0 | | Mode 2-2 |
| | High-layer configuration (subband CQI) | Mode 3-0 | Mode 3-1 | |

Furthermore, when the priorities of the PUSCHs containing periodic CSI are identical, the priorities may be further determined according to ID numbers of CSI processes. Or, when the priorities of the PUSCHs containing aperiodic CSI are identical, the priorities may be further determined according to ID numbers of CSI processes.

It should be noted that the above conditions may be used separately, or may be used after some of them are combined, or may be used after all of them are combined; however, the present disclosure is not limited thereto.

In this embodiment, when the PUSCH contains two or more types of UCI, the priority of the PUSCH may be determined according to the priorities of the two or more types of UCI.

In particular, if a PUSCH carries more than one types of UCI, in comparing priorities of multiple PUSCHs, the comparison is performed according to UCI of highest priority in the PUSCHs; and if priorities of UCI of highest priorities are identical, the comparison is performed according to UCI of second priority in the PUSCHs; and so on.

For example, if a PUSCH in a cell 1 carries ACK/NACK and periodic CSI and a PUSCH in a cell 2 carries aperiodic CSI, as the ACK/NACK of a highest priority in the cell 1 is higher than the aperiodic CSI in the cell 2 in priority, it may be judged that the priority of the PUSCH in the cell 1 is higher than that of the PUSCH in the cell 2.

In another implementation, when the user equipment needs to transmit a PUSCH signal in a serving cell and transmit also a PUSCH signal in another serving cell within the same subframe, the priorities of the power allocation may be determined according to the index/type of at least two cells.

In particular, one of the following conditions or a combination thereof may be adopted: the priority of the PUSCH for a primary cell being higher than the priority of the PUSCH for a secondary cell; the priority of the PUSCH for a macro cell being higher than the priority of the PUSCH for a small cell; and the priority of the PUSCH for a cell with a smaller index being higher than the priority of the PUSCH for a cell with a larger index.

It should be noted that the above conditions may be used separately, or may be used after some of them are combined, or may be used after all of them are combined; however, the present disclosure is not limited thereto.

In still another implementation, when the user equipment needs to transmit a PUSCH signal in a serving cell and transmit also a PUSCH signal in another serving cell within the same subframe, the priorities of the power allocation may be jointly determined according to the type of the UCI carried by the PUSCHs and the index/type of each cell.

Furthermore, if the PUSCHs do not carry UCI, the priorities of the PUSCHs carrying UCI are higher than those of the PUSCHs carrying no UCI. The relevant art may be referred to for the PUSCHs carrying no UCI.

How to sort priorities of the PUSCHs of at least two cells is only illustrated above. However, the present disclosure is not limited thereto, and a particular manner of determining priorities may be determined according to an actual situation. After the above priority sorting is performed, there may exist a case where multiple PUSCHs have identical priorities. How to allocate transmission power after the priorities of the PUSCHs are sorted in a case where the transmission power of the user equipment is limited shall be described below.

In an implementation, the allocating power for the uplink channels of the at least two cells according to the result of the sorting regarding the priorities may include: allocating power for one or more PUSCH(s) having a higher priority, and in a case where there is remaining power, allocating the remaining power for one or more PUSCH(s) having a next priority.

In particular, when it is determined that the user equipment needs to transmit a PUSCH signal in a serving cell and transmit also a PUSCH signal in another serving cell within the same subframe, and it is possible that the transmission power of the user equipment exceeds a maximum transmission power $\hat{P}_{CMAX}$, power allocation is performed on the PUSCH signals in the subframe.

The PUSCHs in each cell are sorted according to the predetermined priorities. The power allocation is performed preferentially on PUSCHs of higher priorities, and transmission power of signals of relatively low priorities is lowered, so as to ensure transmission of signals of higher priorities. In the following description, remaining transmission power refers to transmission power remained after the maximum output power of the user equipment is subtracted by allocated transmission power.

For example, if the user equipment does not support simultaneous transmission of PUSCHs and PUCCHs in the same carrier or different carriers, when PUCCHs are not transmitted and only PUSCHs are transmitted, the PUSCHs of highest priorities may be calculated according to Formula (2), assuming that the PUSCHs of highest priorities are transmitted in a *k-th* carrier/cell,

$$P_{PUSCH}^{k}\left(i\right) = \min\begin{cases} 10\log_{10}\left(\hat{P}_{\mathrm{CMAX},c}(i) - \hat{P}_{\mathrm{PUCCH}}(i)\right), \\ 10\log_{10}(M_{\mathrm{PUSCH,c}}(i)) + P_{\mathrm{O\_PUSCH,c}}(j) + \alpha_c(j)\cdot PL_c + \Delta_{\mathrm{TF,c}}(i) + f_c(i) \end{cases}$$

If there exist multiple PUSCHs of identical priorities,

$$\sum_c w(i)\cdot\hat{P}_{\mathrm{PUSCH},c}(i) \le \hat{P}_{\mathrm{CMAX}}(i)\,;$$

where, $w(i)$ is a power allocation weight; $w(i)$ s of the PUSCHs of identical priorities are identical.

If power of the PUSCH of a highest priority has not reached the maximum transmission power $\hat{P}_{CMAX}$ of the user equipment, power is allocated for the PUSCH of the second priority, assuming that the PUSCH of the second priority is transmitted in a *c-th* carrier/cell:

$$P_{PUSCH}^c\left(i\right) = \min\left( P_{PUSCH}^c\left(i\right), \left(\hat{P}_{CMAX}(i) - P_{PUSCH}^k\left(i\right)\right)\right), \quad c \neq k \qquad (13).$$

And so on. If a sum of power of other PUSCHs than the PUSCH of the lowest priority has not reached the maximum transmission power $\hat{P}_{CMAX}$ of the user equipment, power is allocated for the PUSCH of the lowest priority, assuming that the PUSCH of the lowest priority is transmitted in a *d-th* carrier/cell:

$$\hat{P}_{PUSCH}^d(i) \leq \left( \hat{P}_{CMAX}(i) - \hat{P}_{PUSCH}^j(i) - \hat{P}_{PUSCH}^c(i) - .... \right), d \neq ... \neq c \neq j \qquad (14).$$

If there exist multiple PUSCHs of the lowest priority,

$$\sum_{d \neq ... \neq c \neq j} w(i)\hat{P}_{PUSCH}^d(i) \leq \left( \hat{P}_{CMAX}(i) - \hat{P}_{PUSCH}^j(i) - \hat{P}_{PUSCH}^c(i) - .... \right), d \neq ... \neq c \neq j \qquad (15).$$

The above-described manner is that whether the PUSCHs of the highest priority may be transmitted at full power but not exceeds the maximum transmission power of the user equipment is judged; if it is exceeded, equal power allocation is performed on all PUSCHs of the highest priority, and other PUSCHs of lower priorities are not transmitted; if it is not exceeded, it is ensured that the PUSCHs of the highest priority are transmitted at the full power; if there is power remained, whether the PUSCHs of secondarily highest priority may be transmitted at full power but not exceeds the maximum transmission power of the user equipment is judged; if it is exceeded, equal power allocation is performed on all PUSCHs of the secondarily highest priority, and other PUSCHs of lower priorities are not transmitted; if it is not exceeded, it is ensured that the PUSCHs of the secondarily highest priority are transmitted at the full power; if there is still power remained, power allocation is continued to be performed on PUSCHs of next priority; and so on.

In an implementation, the allocating power for the uplink channels of the at least two cells according to the result of the sorting regarding the priorities may include: weighting transmission power of the PUSCHs according to the result of the sorting regarding the priorities, and allocating power for each of the PUSCHs according to the weights.

In particular, power allocation is performed on the PUSCHs of various priorities, and it is ensured that the PUSCHs of higher priorities have relatively high power, and the PUSCHs of lower priorities have relatively low power.

With the above method, when it is needed to simultaneously transmit PUSCHs in different serving cells within the same subframe, power allocation is performed on multiple PUSCHs. Hence, the transmission power of the user equipment is lowered, and a problem that a sum of transmission power is greater than a configured maximum output power that may be resulted from simultaneously transmitting uplink channels containing UCI in different serving cells within the same frame is solved.

Embodiment 3

An embodiment of the present disclosure provides a power control method for an uplink channel, applicable to a user equipment side keeping in connection with at least two cells. This embodiment shall be described taking PUCCHs and PUSCHs of the at least two cells as an example, with contents identical to those in Embodiment 1 or 2 being not going to be described herein any further.

The two cells carrying PUSCHs and the PUCCHs may be cells with identical types/indices of different base stations. For example, it may be that a primary cell of a macro base station carries the PUCCHs and a primary cell of a small base station carries the PUSCHs, respectively, or it may be that a primary cell of a macro base station carries the PUSCHs and a primary cell of a small base station carries the PUCCHs, respectively; or they may be cells with different types/indices of different base stations, for example, it may be that a primary cell of a macro base station carries the PUCCHs and a secondary cell of a small base station carries the PUSCHs, respectively, or it may be that a secondary cell of a macro base station carries the PUSCHs and a primary cell of a small base station carries the PUCCHs, respectively, or they may be cells with different types/indices of the same eNB. However, the present disclosure is not limited thereto.

In this embodiment, it is assumed that the user equipment may support that PUSCHs and PUCCHs are transmitted simultaneously in the same carrier or in different carriers, and it is not differentiated whether they in the same carrier or in different carriers. That is, it is not the case where the PUSCHs and PUCCHs being transmitted simultaneously in the same carrier is only supported and the PUSCHs and PUCCHs being transmitted in different carriers is not supported, or it is not the case where the PUSCHs and PUCCHs being transmitted in different carriers is only supported and the PUSCHs and PUCCHs being transmitted simultaneously in the same carrier is not supported. In such configuration, if the PUCCHs and PUSCHs are transmitted simultaneously, there will exist the following combinations (taking two cells as an example):

(1) there exist PUCCHs but there exists no PUSCH for the cell 1, and there exist PUCCHs but there exists no PUSCH for the cell 2, which has been described in Embodiment 1;

(2) there exist PUCCHs but there exists no PUSCH for the cell 1, and there exist PUCCHs and PUSCHs for the cell 2; the comparison between the PUCCHs carried by the cell 1 and cell 2 has been described in Embodiment 1; a relationship between the PUCCHs in the cell 1 and PUSCHs in the cell 2 shall be only described herein, which, for example, is divided into the following cases: the PUCCHs of the cell 1 carry ACK/NACK, and the PUSCHs of the cell 2 carry periodic/aperiodic CSI; the PUCCHs of the cell 1 carry SRs, and the PUSCHs of the cell 2 carry periodic/aperiodic CSI; the PUCCHs of the cell 1 carry periodic CSI, and the PUSCHs of the cell 2 carry periodic/aperiodic CSI; and

(3) there exist PUCCHs and PUSCHs for the cell 1, and there exist PUCCHs and PUSCHs for the cell 2; the comparison between the PUCCHs carried by the cell 1 and cell 2 has been described in Embodiment 1, and the comparison between the PUSCHs carried by the cell 1 and cell 2 has been described in Embodiment 2.

The relationship between the PUCCHs in the cell 1 and the PUSCHs in the cell 2 is identical to the relationship between the PUCCHs in the cell 1 and the PUSCHs in the cell 2 in above (2) where there exist PUCCHs but there exists no PUSCH for the cell 1, and there exist PUCCHs and PUSCHs for the cell 2. Following description is given to these two cases.

In this embodiment, the uplink channels of the at least two cells include: a PUCCH for a cell and a PUSCH for another cell. And the sorting priorities of uplink channels of the at least two cells may include: determining priorities of the uplink channels according to one or more combination(s) of: a type of the UCI contained in the uplink channels, a type or indexes of the at least two cells, the types of the uplink channels.

In an implementation, when the user equipment needs to transmit a PUCCH signal in a serving cell and transmit a PUSCH signal in another serving cell within the same subframe, the priorities of the power allocation may be determined according to the type of the UCI carried by the PUCCHs or PUSCHs.

In particular, one of the following conditions or a combination thereof may be used in the priority sorting: the priority of the uplink channels containing ACK/NACK being higher than the priority of the uplink channels containing periodic CSI; the priority of the uplink channels containing an SR being higher than the priority of the uplink channels containing periodic CSI; the priority of the uplink channels containing ACK/NACK being higher than the priority of the uplink channels containing an SR; the priority of the uplink channels containing an SR being higher than the priority of the uplink channels containing aperiodic CSI; and the priority of the uplink channels containing aperiodic CSI being higher than the priority of the uplink channels containing periodic CSI.

Furthermore, the method may include: sorting priorities of the uplink channels containing different types of periodic CSI; Embodiment 1 may be referred to for how to sort; or sorting priorities of the uplink channels containing different types of aperiodic CSI; Embodiment 2 may be referred to for how to sort.

Furthermore, when the priorities of the uplink channels containing periodic CSI are identical, the priorities may be further determined according to ID numbers of CSI processes. Or, when the priorities of the uplink channels containing aperiodic CSI are identical, the priorities may be further determined according to ID numbers of CSI processes.

In this implementation, when the uplink channels contain two or more types of UCI, the priority of the uplink channels may be determined according to the priorities of the two or more types of UCI.

In particular, if a PUCCH carries more than one types of UCI, in comparing priorities of the PUCCHs/PUSCHs, the comparison may be performed according to UCI of highest priority in the PUCCHs; and if priorities of UCI of highest priorities are identical, the comparison is performed according to UCI of second priority in the PUCCHs; and so on.

For example, if a PUCCH in a cell 1 carries ACK/NACK and periodic CSI and a PUSCH in a cell 2 carries aperiodic CSI, as the ACK/NACK of a highest priority in the cell 1 is higher than the aperiodic CSI of a highest priority in the cell 2 in priority, it may be judged that the priority of the PUCCH in the cell 1 is higher than that of the PUSCH in the cell 2.

In another implementation, when the user equipment needs to transmit a PUCCH signal in a serving cell and transmit a PUSCH signal in another serving cell within the same subframe, the priorities of the power allocation may be determined according to the index/type of the at least two cells.

In particular, one of the following conditions or a combination thereof may be adopted in the priority sorting: the priority of the uplink channels for a primary cell being higher than the priority of the uplink channels for a secondary cell; the priority of the uplink channels for a macro cell being higher than the priority of the uplink channels for a small cell; and the priority of the uplink channels for a cell with a smaller index being higher than the priority of the uplink channels for a cell with a larger index.

In a further implementation, when the user equipment needs to transmit a PUCCH signal in a serving cell and transmit a PUSCH signal in another serving cell within the same subframe, the priorities of the power allocation may be determined according to the type of the uplink channels.

In particular, the priority of the PUCCHs is higher than that of the PUSCHs.

In still another implementation, when the user equipment needs to transmit a PUCCH signal in a serving cell and transmit a PUSCH signal in another serving cell within the same subframe, the priorities of the power allocation may be jointly determined according to the type of the UCI carried by the PUCCHs or the PUSCHs and the types/indices of the at least two cells.

In still another implementation, when the user equipment needs to transmit a PUCCH signal in a serving cell and transmit a PUSCH signal in another serving cell within the same subframe, the priorities of the power allocation may be jointly determined according to the type of the UCI carried by the PUCCHs or the PUSCCHs and the types of the uplink channels.

In still another implementation, when the user equipment needs to transmit a PUCCH signal in a serving cell and transmit a PUSCH signal in another serving cell within the same subframe, the priorities of the power allocation may be jointly determined according to the types of the uplink channels and the types/indices of the at least two cells.

In still another implementation, when the user equipment needs to transmit a PUCCH signal in a serving cell and transmit a PUSCH signal in another serving cell within the same subframe, the priorities of the power allocation may be jointly determined according to the type of the UCI carried by the PUCCHs or the PUSCCHs, the types of the uplink channels and the types/indices of the at least two cells.

How to sort priorities of the PUCCHs/PUSCHs of at least two cells is only illustrated above. However, the present disclosure is not limited thereto, and a particular manner of determining priorities may be determined according to an actual situation. After the above priority sorting is performed, there may exist a case where multiple PUCCHs/PUSCHs have identical priorities. How to allocate transmission power after the priorities of the PUCCHs/PUSCHs are sorted in a case where the transmission power of the user equipment is limited shall be described below.

In an implementation, the allocating power for the uplink channels of the at least two cells according to the result of the sorting regarding the priorities may include: allocating power for one or more uplink channel(s) having a higher priority, and in a case where there is remaining power, allocating the remaining power for one or more uplink channel(s) having a next priority.

In particular, when it is determined that the user equipment needs to transmit PUCCHs in a serving cell and transmit PUSCHs in one or more other serving cell(s) within the same subframe, and it is possible that the transmission power of the user equipment exceeds a maximum transmission power $\hat{P}_{CMAX}$, power allocation is performed on the PUCCH signals and the PUSCH signals in the subframe.

The PUSCHs/PUCCHs in each cell are sorted according to the predetermined priorities. The power allocation is performed preferentially on uplink channels of higher priorities, and transmission power of signals of relatively low priorities is lowered, so as to ensure transmission of signals of higher priorities. In the following description, remaining transmission power refers to transmission power remained after the maximum output power of the user equipment is subtracted by allocated transmission power.

That is, a PUCCH of a highest priority may be calculated according to Formula (3), or a PUSCH of a highest priority may be calculated according to Formula (1). If there exist multiple PUSCHs/PUCCHs, those of identical priorities are allocated with weights at identical power. For those of secondary priorities, if transmission power remained after the uplink channels of higher priorities are allocated with power is still greater than 0, the remaining transmission power is allocated to the uplink channels of secondary priorities.

For example, whether the uplink channels of the highest priority may be transmitted at full power but not exceeds the maximum transmission power of the user equipment is judged first; if it is exceeded, equal power allocation is performed on all uplink channels of the highest priority, and other uplink channels of lower priorities are not transmitted; if it is not exceeded, it is ensured that the uplink channels of the highest priority are transmitted at the full power; if there is power remained, whether the uplink channels of secondarily highest priority may be transmitted at full power but not exceeds the maximum transmission power of the user equipment is judged; if it is exceeded, equal power allocation is performed on all uplink channels of the secondarily highest priority, and other uplink channels of lower priorities are not transmitted; if it is not exceeded, it is ensured that the uplink channels of the secondarily highest priority are transmitted at the full power; if there is still power remained, power allocation is continued to be performed on uplink channels of next priority; and so on.

In another implementation, the allocating power for the uplink channels of the at least two cells according to the result of the sorting regarding the priorities may include: weighting transmission power of the uplink channels according to the result of the sorting regarding the priorities, and allocating power for each of the uplink channels according to the weights.

In particular, power allocation is performed on the uplink channels of various priorities, and it is ensured that the uplink channels of higher priorities have relatively high power, and the uplink channels of lower priorities have relatively low power.

With the above method, when it is needed to simultaneously transmit PUSCHs and PUCCHs in different serving cells within the same subframe, power allocation is performed on multiple PUSCHs/PUCCHs. Hence, the transmission power of the user equipment is lowered, and a problem that a sum of transmission power is greater than a configured maximum output power that may be resulted from simultaneously transmitting PUSCHs and PUCCHs in different serving cells within the same frame is solved.

Embodiment 4

Based on embodiments 1, 2 and 3, the embodiment of the present disclosure shall further describe the power control method for an uplink channel. In this embodiment, embodiments 1, 2 and 3 are used in a combined manner. And implementations of two of these embodiments may be carried out, or all the three embodiments are carried out.

For example, embodiments 1 and 3 may be combined. If a PUCCH1 and a PUSCH containing UCI (PUSCH1 with UCI) are transmitted in the cell 1 and a PUCCH2 is transmitted in the cell 2, comparison of the PUCCH1 with the PUCCH2 and comparison of the PUCCH2 with the PUSCH1 are respectively concerned. Assuming that the PUCCH1 carries ACK/NACK, the PUSCH1 carries aperiodic CSI and the PUCCH2 carries periodic CSI, the PUCCH1 may be preferentially allocated with power according to a manner in embodiments 1 and 3; if there exists remaining power, it may be allocated to the PUSCH1; and if there still exists remaining power, it may be allocated to the PUCCH2.

For another example, embodiments 1, 2 and 3 may be combined. If a PUCCH1 and a PUSCH1 with UCI are transmitted in the cell 1 and a PUCCH2 and a PUSCH2 with UCI are transmitted in the cell 2, comparison of the PUCCH1 with the PUCCH2, comparison of the PUCCH1 with the PUSCH2, comparison of the PUCCH2 with the PUSCH1 and comparison of the PUSCH1 with the PUSCH2 are respectively concerned. Assuming that the PUCCH1 carries ACK/NACK, the PUSCH1 carries aperiodic CSI, the PUCCH2 carries ACK/NACK and the PUSCH2 carries periodic CSI, according to a manner in embodiments 1, 2 and 3, the PUCCH1 and the PUCCH2 may have the same highest priority (if the sorting is performed according to the type of the UCI only, but not according to the types of the cells), the priority of the PUSCH1 is second, and the priority of the PUSCH2 is third, and the PUCCH1 and the PUCCH2 may be preferentially allocated with power (which is not lowered); if there exists remaining power, it may be allocated to the PUSCH1; and if there still exists remaining power, it may be allocated to the PUSCH2.

For a further example, assuming that the schemes in embodiments 1 and 2 are effective and the scheme in Embodiment 3 is not taken into account, that is, when the PUSCH is compared with the PUCCH, according only the relevant art, the priorities of the PUCCHs are higher than the priorities of the PUSCHs carrying UCI, and the priorities of the PUSCHs carrying UCI are higher than the priorities of the PUSCHs carrying no UCI, if the PUCCH1 (containing ACK/NACK) and the PUSCH1 with UCI (containing aperiodic CSI) are transmitted in the cell 1 and the PUCCH2 (containing periodic CSI) is transmitted in the cell 2, the priority of the PUCCH1 is highest, the priority of the PUCCH2 is the second, and the priority of the PUSCH1 is the lowest.

Furthermore, if the user equipment may simultaneously transmit PUCCHs and PUSCHs in different carriers, but may not simultaneously transmit PUCCHs and PUSCHs in the same carrier, priorities of the PUCCHs and PUSCHs in different carriers may be sorted according to the type of the UCI, or according to the cell/carrier serial numbers, or according to the types of the uplink channels. The sorting of different types of the uplink channels may be:

- uplink channels containing ACK/NACK > uplink channels containing SRs > uplink channels containing CSI
- uplink channels containing aperiodic CSI > uplink channels containing periodic CSI
- uplink channels containing different types of reports of periodic CSI may be sorted, and may not be sorted.

A particular method of power allocation is identical those in embodiments 1-3, and shall not be described any further.

With the above method, when it is needed to simultaneously transmit PUSCHs/PUCCHs in different serving cells within the same subframe, power allocation is performed on multiple PUSCHs/PUCCHs. Hence, the transmission power of the user equipment is lowered, and a problem that a sum of transmission power is greater than a configured maximum output power that may be resulted from simultaneously transmitting uplink channels containing UCI in different serving cells within the same frame is solved.

Embodiment 5

An embodiment of the present disclosure provides a user equipment, keeping in connection with at least two cells. This embodiment corresponds to the power control method for an uplink channel described in embodiments 1-4, with contents identical to those in embodiments 1-4 being not going to be described any further.

Fig. 9 is a schematic diagram of a structure of the user equipment of the embodiment of the present disclosure. As shown in Fig. 9, the user equipment 900 includes a priority determining unit 901 and a power control unit 902. Other components of the user equipment 900 are not shown in the figure, and the relevant art may be referred to for them.

The priority determining unit 901 is configured to sort priorities of uplink channels of the at least two cells, when uplink channel signals containing UCI are transmitted in the same subframe for the at least two cells, and the power control unit 902 is configured to allocate power for uplink channels of the at least two cells, or perform selection on the uplink channels, according to a result of the sorting regarding the priorities.

In particular implementation, the user equipment 900 may be configured to generate ACK/NACK feedback according to a received downlink signal, or generate corresponding uplink control information according to a period and offset configured for periodic CSI, or according to received aperiodic CSI triggering indication, or according to a request for needed resources of uplink traffics.

The user equipment 900 may be configured to transmit the uplink channel signals according to a result of power allocation for uplink channels, or a result of selection of uplink channels. The relevant art may be referred to for details of the generation of the UCI and the transmission of the uplink channels.

In an implementation, the uplink channels of the at least two cells include: a PUCCH for a cell and a PUCCH for another cell; and the priority determining unit 901 is configured to determine priorities of the PUCCHs according to the type of the UCI contained in the PUCCHs and/or the type or indexes of the at least two cells.

The power control unit 902 may be configured to allocate power for one or more PUCCH(s) having a higher priority, and in a case where there is remaining power, allocate the remaining power for one or more PUCCH(s) having a next priority; or weight transmission power of the PUCCHs according to the result of the sorting regarding the priorities, and allocate power for each of the PUCCHs according to the weights; or allocate power for a PUCCH having a highest priority, and discard rest of the PUCCHs.

In another implementation, the uplink channels of the at least two cells include: a PUCCH for a cell and a PDSCH for another cell; and the priority determining unit 901 may be configured to determine priorities of the uplink channels according to one piece of the following information or a combination thereof: the type of the UCI contained in the uplink channels, the type or indexes of the at least two cells, and the types of the uplink channels.

The power control unit 902 may be configured to allocate power for one or more uplink channel(s) having a higher priority, and in a case where there is remaining power, allocate the remaining power for one or more uplink channel(s) having a next priority; or weight transmission power of the uplink channels according to the result of the sorting regarding the priorities, and allocate power for each of the uplink channels according to the weights.

In a further implementation, the uplink channels of the at least two cells include: a PDSCH for a cell and a PDSCH for another cell; and the priority determining unit 901 may be configured to determine priorities of the PDSCHs according to the type of the UCI contained in the PDSCHs, and/or the type or indexes of the at least two cells.

The power control unit 902 may be configured to allocate power for one or more PDSCH(s) having a higher priority, and in a case where there is remaining power, allocate the remaining power for one or more PDSCH(s) having a next priority, or weight transmission power of the PDSCH(s) according to the result of the sorting regarding the priorities, and allocate power for each of the PDSCHs according to the weights.

An embodiment of the present disclosure provides a communication system. Fig. 10 is a schematic diagram of a structure of the communication system of the embodiment of the present disclosure. As shown in Fig. 10, the communication system 1000 includes a first base station, a second base station and a user equipment 1001. The first base station or the second base station may be a macro base station, and may also be a small base station, etc. And the present disclosure is not limited thereto.

The user equipment 1001 is configured to keep in connection with at least two cells formed by the first base station and the second base station, and sort priorities of uplink channels of the at least two cells, when uplink channel signals containing UCI are transmitted in the same subframe for the at least two cells; and allocate power for the uplink channels of the at least two cells, or perform selection on the uplink channels, according to a result of the sorting regarding the priorities.

An embodiment of the present disclosure provides a computer-readable program, wherein when the program is executed in a user equipment, the program enables a computer to carry out the power control method for an uplink channel as described in embodiments 1-4 in the user equipment.

An embodiment of the present disclosure provides a storage medium in which a computer-readable program is stored, wherein the computer-readable program enables a computer to carry out the power control method for an uplink channel as described in embodiments 1-4 in a user equipment.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

One or more functional blocks and/or one or more combinations of the functional blocks in Figures may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principles of the present disclosure, and such variants and modifications fall within the scope of the present disclosure.

**Claims**

1. A power control method for an uplink channel, applicable to a user equipment keeping in connection with at least two cells, the method comprising:

   sorting, by the user equipment, priorities of uplink channels of the at least two cells when the user equipment transmits uplink channel signals containing uplink control information (UCI) for the at least two cells in the same subframe; and
   allocating power for the uplink channels of the at least two cells, or performing selection on the uplink channels, according to a result of the sorting regarding the priorities.

2. The method according to claim 1, wherein the uplink channels of the at least two cells comprise: a physical uplink control channel (PUCCH) for a cell and a PUCCH for another cell;
   and the sorting priorities of uplink channels of the at least two cells comprises:

   determining priorities of the PUCCHs according to a type of the UCI contained in the PUCCHs and/or a type or indexes of the at least two cells.

3. The method according to claim 2, wherein one of the following conditions or a combination thereof is adopted in determining the priorities of the PUCCHs according to the type of the UCI contained in the PUCCHs:

   the priority of the PUCCH containing ACK/NACK being higher than the priority of the PUCCH containing periodic channel state information (CSI); the priority of the PUCCH containing a schedule request (SR) being higher than the priority of the PUCCH containing periodic CSI; and the priority of the PUCCH containing ACK/NACK being higher than the priority of the PUCCH containing an SR.

4. The method according to claim 3, wherein the method further comprises:

   sorting priorities of the PUCCHs containing different types of periodic CSI.

5. The method according to claim 4, wherein the method further comprises:

   further determining the priorities according to ID numbers of CSI processes, when the priorities of the PUCCHs containing periodic CSI are identical.

6. The method according to claim 2, wherein when the PUCCHs contain two or more types of UCI, the method further comprises:

   determining the priorities of the PUCCHs according to priorities of the two or more types of UCI.

7. The method according to claim 2, wherein one of the following conditions or a combination thereof is adopted in determining the priorities of the PUCCHs according to the type or the indexes of the at least two cells:

> the priority of the PUCCH for a primary cell being higher than the priority of the PUCCH for a secondary cell; the priority of the PUCCH for a macro cell being higher than the priority of the PUCCH for a small cell; and the priority of the PUCCH for a cell with a smaller index being higher than the priority of the PUCCH for a cell with a larger index.

8. The method according to claim 2, wherein the allocating power for the uplink channels of the at least two cells according to a result of the sorting regarding the priority comprises:

> allocating power for one or more PUCCH(s) having a higher priority, and in a case where there is remaining power, allocating the remaining power for one or more PUCCH(s) having a next priority; or
> weighting transmission power of the PUCCHs according to the result of the sorting regarding the priority, and allocating power for each of the PUCCHs according to weights.

9. The method according to claim 2, wherein the performing selection on the uplink channels of the at least two cells according to the result of the sorting regarding the priority comprises:

> allocating power for a PUCCH having a highest priority, and discarding the rest of the PUCCHs.

10. The method according to claim 1, wherein the uplink channels of the at least two cells comprise: a PUCCH for a cell and a physical uplink shared channel (PUSCH) for another cell;
and the sorting priorities of uplink channels of the at least two cells comprises:

> determining the priorities of the uplink channels according to one piece of the following information or a combination thereof: a type of the UCI contained in the uplink channels, a type or indexes of the at least two cells, and the types of the uplink channels.

11. The method according to claim 10, wherein one of the following conditions or a combination thereof is adopted in determining the priorities of the uplink channels according to the type of the UCI contained in the uplink channels:

> the priority of the uplink channel containing ACK/NACK being higher than the priority of the uplink channel containing periodic CSI; the priority of the uplink channel containing SR being higher than the priority of the uplink channel containing periodic CSI; the priority of the uplink channel containing ACK/NACK being higher than the priority of the uplink channel containing SR; the priority of the uplink channel containing SR being higher than the priority of the uplink channel containing aperiodic CSI; and the priority of the uplink channel containing aperiodic CSI being higher than the priority of the uplink channel containing periodic CSI.

12. The method according to claim 11, wherein the method further comprises:

> sorting the priorities of the uplink channels containing different types of periodic CSI, or sorting the priorities of the uplink channels containing different types of aperiodic CSI.

13. The method according to claim 12, wherein the method further comprises:

> further determining the priorities according to ID numbers of CSI processes, when the priorities of the uplink channels containing periodic CSI or aperiodic CSI are identical.

14. The method according to claim 10, wherein when the uplink channels contain two or more types of UCI, the method further comprises:

> determining the priorities of the uplink channels according to priorities of the two or more types of UCI.

15. The method according to claim 10, wherein one of the following conditions or a combination thereof is adopted in determining the priorities of the uplink channels according to the type or the indexes of the at least two cells:

> the priority of the uplink channel for a primary cell being higher than the priority of the uplink channel for a secondary cell; the priority of the uplink channel for a macro cell being higher than the priority of the uplink channel for a small cell; and the priority of the uplink channel for a cell with a smaller index being higher than the priority of the uplink channel for a cell with a larger index.

16. The method according to claim 10, wherein the determining the priorities of the uplink channels according to the types of the uplink channels comprises: the priority of the PUCCH being higher than the priority of the PUSCH.

17. The method according to claim 10, wherein the allocating power for the uplink channels of the at least two cells according to a result of the sorting regarding the priorities comprises:

allocating power for one or more uplink channel(s) having a higher priority, and in a case where there is remaining power, allocating the remaining power for one or more uplink channel(s) having a next priority; or
weighting transmission power of the uplink channels according to the result of the sorting regarding the priorities, and allocating power for each of the uplink channels according to weights.

18. The method according to claim 1, wherein the uplink channels of the at least two cells comprise: a PUSCH for a cell and a PUSCH for another cell;
and the sorting priorities of uplink channels of the at least two cells comprises:

determining priorities of the PUSCHs according to a type of the UCI contained in the PUSCHs and/or a type or indexes of the at least two cells.

19. The method according to claim 18, wherein one of the following conditions or a combination thereof is adopted in determining the priorities of the PUSCHs according to the type of the UCI contained in the PUSCHs:

the priority of the PUSCH containing ACK/NACK being higher than the priority of the PUSCH containing periodic CSI; the priority of the PUSCH containing ACK/NACK being higher than the priority of the PUSCH containing aperiodic CSI; and the priority of the PUSCH containing aperiodic CSI being higher than the priority of the PUSCH containing periodic CSI.

20. The method according to claim 19, wherein the method further comprises:

sorting the priorities of the PUSCHs containing different types of periodic CSI, or sorting the priorities of the PUSCHs containing different types of aperiodic CSI.

21. The method according to claim 20, wherein the method further comprises:

further determining the priorities according to ID numbers of CSI processes, when the priorities of the PUSCHs containing periodic CSI or aperiodic CSI are identical.

22. The method according to claim 18, wherein when the PUSCHs contain two or more types of UCI, the method further comprises:

determining the priorities of the PUSCHs according to priorities of the two or more types of UCI.

23. The method according to claim 18, wherein one of the following conditions or a combination thereof is adopted in determining the priorities of the PUSCHs according to the types or the indexes of the at least two cells:

the priority of the PUSCH for a primary cell being higher than the priority of the PUSCH for a secondary cell; the priority of the PUSCH for a macro cell being higher than the priority of the PUSCH for a small cell; and the priority of the PUSCH for a cell with a smaller index being higher than the priority of the PUSCH for a cell with a larger index.

24. The method according to claim 18, wherein the allocating power for the uplink channels of the at least two cells according to a result of the sorting regarding the priorities comprises:

allocating power for one or more PUSCH(s) having a higher priority, and in a case where there is remaining power, allocating the remaining power for one or more PUSCH(s) having a next priority; or

weighting transmission power of the PUSCHs according to the result of the sorting regarding the priorities, and allocating power for each of the PUSCHs according to weights.

25. A user equipment, keeping in connection with at least two cells, the user equipment comprising:

a priority determining unit configured to sort priorities of uplink channels of the at least two cells, when uplink channel signals containing UCI are transmitted in the same subframe for the at least two cells; and
a power control unit configured to allocate power for the uplink channels of the at least two cells, or perform selection on the uplink channels, according to a result of the sorting regarding the priorities.

26. The user equipment according to claim 25, wherein the uplink channels of the at least two cells comprise: a PUCCH for a cell and a PUCCH for another cell;
and the priority determining unit is further configured to determine priorities of the PUCCHs according to a type of the UCI contained in the PUCCHs and/or a type or indexes of the at least two cells.

27. The user equipment according to claim 26, wherein the power control unit is further configured to allocate power for one or more physical uplink channel(s) having a higher priority, and in a case where there is remaining power, allocate the remaining power for one or more physical uplink channel(s) having a next priority; or
weight transmission power of the PUCCHs according to the result of the sorting regarding the priorities, and allocate power for each of the PUCCHs according to weights; or
allocate power for one PUCCH having a higher priority, and discard the rest of the PUCCHs.

28. The user equipment according to claim 25, wherein the uplink channels of the at least two cells comprise: a PUCCH for a cell and a PUSCH for another cell;
and the priority determining unit is further configured to determine priorities of the uplink channels according to one piece of the following information or a combination thereof: a type of the UCI contained in the uplink channels, a type or indexes of the at least two cells, and the types of the uplink channels.

29. The user equipment according to claim 28, wherein the power control unit is further configured to allocate power for one or more uplink channel(s) having a higher priority, and in a case where there is remaining power, allocate the remaining power for one or more uplink channel(s) having a next priority; or
weight transmission power of the uplink channels according to the result of the sorting regarding the priorities, and allocate power for each of the uplink channels according to weights.

30. The user equipment according to claim 25, wherein the uplink channels of the at least two cells comprise: a PUSCH for a cell and a PUSCH for another cell;
and the priority determining unit is further configured to determine priorities of the PUSCHs according to a type of the UCI contained in the PUSCHs, and/or a type or indexes of the at least two cells.

31. The user equipment according to claim 30, wherein the power control unit is further configured to allocate power for one or more PUSCH(s) having a higher priority, and in a case where there is remaining power, allocate the remaining power for one or more PUSCH(s) having a next priority; or
weight transmission power of the PUSCHs according to the result of the sorting regarding the priorities, and allocate power for each of the PUSCHs according to weights.

32. A communication system, comprising:

a user equipment, keeping in connection with at least two cells, and configured to sort priorities of uplink channels of the at least two cells, when uplink channel signals containing UCI are transmitted in the same subframe for the at least two cells; and allocate power for the uplink channels of the at least two cells, or perform selection on the uplink channels, according to a result of the sorting regarding the priorities.

33. A computer-readable program, wherein when the program is executed in user equipment, the program enables a computer to carry out the power control method for an uplink channel as claimed in any one of claims 1-24 in the user equipment.

34. A storage medium in which a computer-readable program is stored, wherein the computer-readable program enables a computer to carry out the power control method for an uplink channel as claimed in any one of claims 1-24 in user

equipment.

PUCCH

PUCCH

Primary serving cell

PUCCH

PUCCH

Secondary serving cell

# Fig. 1

PUSCH

Primary serving cell

PUSCH

Secondary serving cell

# Fig. 2

PUCCH

PUCCH

Primary serving cell

PUSCH

Secondary serving cell

# Fig. 3

PUCCH

PUSCH

PUCCH

Primary serving cell

Secondary serving cell

# Fig. 4

Macro base station

Small base
station

## Fig. 5

Macro base station

Small base
station

## Fig. 6

Macro base station

Small base station

## Fig. 7

801

The UE sorts priorities of uplink channels of the at least two cells when the UE transmits uplink channel signals containing UCI for the at least two cells in the same subframe

802

The UE allocates power for the uplink channels of the at least two cells, or performs selection on the uplink channels, according to a result of the sorting regarding the priorities

## Fig. 8

900

901

Priority determining unit

902

Power control unit

## Fig. 9

**1000**

**1001**

# Fig. 10

# INTERNATIONAL SEARCH REPORT

| International application No. |
|---|
| PCT/CN2013/081382 |

### A. CLASSIFICATION OF SUBJECT MATTER

H04W 52/14 (2009.01) i

According to International Patent Classification (IPC) or to both national classification and IPC

### B. FIELDS SEARCHED

Minimum documentation searched (classification system followed by classification symbols)

H04L; H04W; H04Q; H04B

Documentation searched other than minimum documentation to the extent that such documents are included in the fields searched

Electronic data base consulted during the international search (name of data base and, where practicable, search terms used)

WPI, EPODOC, CNPAT, CNKI, IEEE: multiple -sik, multiple - cell, power, control+, priority, frame, sequencing, uplink channel, subframe, parameter, configur+, cell, type, index, scheduler, period, BS, reference w signal, anchor w cell, uplink

### C. DOCUMENTS CONSIDERED TO BE RELEVANT

| Category* | Citation of document, with indication, where appropriate, of the relevant passages | Relevant to claim No. |
|---|---|---|
| X | CN 103200663 A (HUAWEI TECHNOLOGIES CO., LTD.) 10 July 2013 (10.07.2013) description, paragraphs [0008] to [0023] and figures 1 and 10 | 1, 25, 32-34 |
| A | CN 101026402 A (ZTE CORPARATON) 29 August 2007 (29.08.2007) the whole document | 1-34 |
| A | WO 2012155518 A1 (ZTE CORPARATON) 22 November 2012 (22.11.2012) the whole document | 1-34 |
| A | CN 102045823 A (DATANG MOBILE COMMUNICATIONS EQUIPMENT CO., LTD.) 04 May 2011 (04.05.2011) the whole document | 1-34 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 24.04.2014 | 28.05.2014 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer SHEN, Minjie Telephone No. (86-10)62413417 |
|---|---|

Form PCT/ISA /210 (second sheet) (July 2009)

## INTERNATIONAL SEARCH REPORT
Information on patent family members

| | International application No. |
|---|---|
| | PCT/CN2013/081382 |

| Patent Documents referred in the Report | Publication Date | Patent Family | Publication Date |
|---|---|---|---|
| CN 103200663 A | 10.07.2013 | WO 2013104232 A1 | 18.07.2013 |
| CN 101026402 A | 29.08.2007 | None | |
| WO 2012155518 A1 | 22.11.2012 | CN 102244923 A | 16.11.2011 |
| CN 102045823 A | 04.05.2011 | CN 102045823 B | 05.02.2014 |

Form PCT/ISA /210 (patent family annex) (July 2009)